# EUROPÄISCHE PATENTSCHRIFT

(11) **EP 0 715 271 B1**
(45) Veröffentlichungstag und Bekanntmachung des Hinweises auf die Patenterteilung: **16.04.2003**
(21) Anmeldenummer: 95118440.7
(22) Anmeldetag: 23.11.1995
(51) Int. Cl.: G06K 7/06, G06K 7/00

(54) **Chipkartenleser**
Chip card reader
Lecteur de carte à puce

(30) Priorität: 28.11.1994 DE 4442007
(43) Veröffentlichungstag der Anmeldung: 05.06.1996
(73) Patentinhaber: STOCKO Contact GmbH & Co. KG, 42327 Wuppertal (DE); Neifer, Wolfgang, 85354 Freising (DE)
(72) Erfinder: Neifer, Wolfgang, D-85354 Freising (DE); Klatt, Dieter, D-42489 Wülfrath (DE)
(74) Vertreter: Stenger, Watzke & Ring Patentanwälte

(56) Entgegenhaltungen:
- EP-A- 0 605 204
- EP-A- 0 609 974
- DE-A- 4 310 517

## Beschreibung

Die vorliegende Erfindung betrifft einen Chipkartenleser mit den Merkmalen des Oberbegriffs des Anspruchs 1.

Derzeit sind zwei Systeme gebräuchlich, um auf Scheckkarten Informationen zu speichern, nämlich ein Magnetstreifen für eine geringere Anzahl von Informationen und ein elektronischer Chip für eine größere Zahl von Informationen und einen sichereren Zugang.

Chipkarten haben sich insbesondere durchgesetzt in ihrer einfachsten Ausführungsform für Telefonkarten und in einer technisch weiterentwickelten Form für Krankenkassenberechtigungskarten und als Berechtigungskarten für Mobiltelefone.

Es ist derzeit geplant, Chipkarten auch für weitergehende Systeme einzusetzen, bei denen Zugangsberechtigung oder eine Gebührenabrechnung erforderlich sind, beispielsweise auf dem Gebiet des Pay-TV und bei der Gebührenerhebung auf Autobahnen. Außerdem soll die Chipkarte in Zukunft verwendet werden, um ähnlich der Telefonkarte kleinere Geldbeträge, beispielsweise an Parkhauskassen oder bei der Benutzung öffentlicher Verkehrsmittel zu entrichten. Hierfür wäre es sinnvoll, eine Chipkarte einzusetzen, die bei leerem Gebührenspeicher nicht weggeworfen werden muß wie die Telefonkarte, sondern an bestimmten Terminals wieder geladen werden kann.

Ein Chipkartenleser zum Einschub in einen Aufnahmekanal eines Computers ist beispielsweise aus der DE 43 10 517 bekannt, bei dem jedoch nur eine Chipkarte zur Zeit gelesen werden kann, was im Hinblick auf Datensicherheit im Zahlungs- und Datenverkehr derzeit nicht ausreichend zu sein scheint. Die Flexibilität dieses Moduls ist beschränkt.

Es ist die Aufgabe der Erfindung, einen Kartenleser zu schaffen, der bei seinem Einsatz ein höheres Maß an Flexibilität und Sicherheit bietet.

Diese Aufgabe wird von einem Chipkartenleser mit den Merkmalen des Anspruchs 1 gelöst.

Weil der Chipkartenleser im Bereich des ersten Abschnitts eine Aufnahmevorrichtung für wenigstens eine zweite Chipkarte aufweist, die so angeordnet ist, daß in der Betriebsposition des Chipkartenlesers die wenigstens eine zweite Chipkarte nicht entnehmbar ist, ist sichergestellt, daß während der Betriebsbereitschaft des Chipkartenlesers die zweite Chipkarte nicht gewechselt werden kann. In dieser zweiten Chipkarte können Informationen über den Benutzer sowie Zugangsberechtigungen gespeichert sein, die in Verbindung mit der später einzuführenden ersten Chipkarte wichtig sind.

Wenn die zweite Chipkarte kleiner ist als die erste Chipkarte, beispielsweise bei Mobiltelefonen verbreiteter Plug-In-Chip vorgesehen ist, können die geometrischen Abmessungen des Chipkartenlesers kleingehalten werden, insbesondere nur unwesentlich größer als die geometrischen Ablesungen der ersten Chipkarte gewählt werden.

Die mechanische Zuverlässigkeit des erfindungsgemäßen Chipkartenlesers wird verbessert, wenn an einer in Einschubrichtung seitlich liegenden Schmalseite des ersten Abschnitts zum Einführen der wenigstens einen zweiten Chipkarte angeordnet ist. Kompatibilität mit Standardsteckplätzen, beispielsweise in Computern, wird erreicht, wenn die in Einschubrichtung vorne liegende Stirnseite des Chipkartenlesers eine Anzahl elektrischer Kontakte aufweist. Diese Kontakte können an ein gängiges Bussystem angepaßt sein. Wenn der Chipkartenleser an einer in Einschubrichtung seitlich liegenden Außenfläche des ersten Abschnitts ein optisches Sender- und/oder Empfängermodul aufweist, kann die Kommunikation mit dem elektronischen Gerät, in das der Chipkartenleser eingeschoben werden kann, auch über diese optische Schnittstelle erfolgen. Hierbei ist von besonderem Vorteil, daß optische Schnittstellen korrosionsfest gestaltet werden können. Es kann ebenfalls in Einschubrichtung seitlich an dem ersten Abschnitt ein Anschluß für Hochfrequenz vorgesehen sein, mit dem ein in dem Chipkartenleser generiertes Hochfrequenzsignal an das elektronische Gerät abgegeben werden kann und umgekehrt.

Wenn an dem Chipkartenleser an seinem ersten Abschnitt eine Eingriffsmöglichkeit für eine Rastvorrichtung vorgesehen ist, kann der Chipkartenleser während des Betriebs in dem elektronischen Gerät verriegelt werden. Besonders vorteilhaft erscheint derzeit, wenn der Chipkartenleser eine Eingriffsmöglichkeit für einen motorisch angetriebenen Einzug aufweist, wobei der Einzug selbst dem elektronischen Gerät zugeordnet wäre.

Der zweite, aus dem elektronischen Gerät hervorstehende Abschnitt des Chipkartenlesers kann mit einer Sende- und Empfangseinrichtung versehen sein, wobei die Sende- und Empfangseinrichtung eine Antenne umfassen kann, die als Funkantenne für eine Frequenz aus dem Frequenzbereich von 500 MHz bis 3 GHz ausgestaltet ist. Es kann auch eine optische Sende- und Empfangseinrichtung vorgesehen sein, wie sie derzeit für Tonfrequenz (drahtlose Kopfhörer) oder für Daten (Druckerschnittstellen) verwenden werden. Optische Sende- und Empfangseinrichtungen arbeiten derzeit vorwiegend im Infrarotbereich.

Der Chipkartenleser kann ein Oberteil und ein Unterteil umfassen, die miteinander lösbar zu verbinden sind. Dabei kann beispielsweise das Oberteil oder das Unterteil das Kommunikationsmodul des Chipkartenlesers enthalten und je nach Einsatzbereich als Funkmodul oder als Infrarotmodul ausgestaltet sein, wobei der jeweils andere Teil des Chipkartenlesers den Kartenleser und die elektrische Kontaktierung zu dem elektronischen Gerät enthält. Je nach Verwendungszweck kann dann das jeweils erforderliche Kommunikationsmodul verwendet werden.

Die Verwendung der Ausführungsform mit Oberteil und Unterteil wird vereinfacht, wenn die beiden Teile in Einschubrichtung relativ zueinander formschlüssig festgelegt werden können, insbesondere durch Positioniermittel in der Ebene der Flachseite, weil dann das Ober- und das Unterteil zusammengefügt werden können und gemeinsam in den Aufnahmeteil des elektronischen Geräts eingeführt werden können.

Die Kommunikation zwischen dem Oberteil und dem Unterteil kann über eine elektrische Verbindung erfolgen, über eine kontaktlose Verbindung wie z.B. Infrarot - oder Hochfrequenzschnitt - stellen oder über eine in Folienform ausgestaltete Verbindung, die zwischen dem Ober- und dem Unterteil eine Art Folienscharnier bildet.

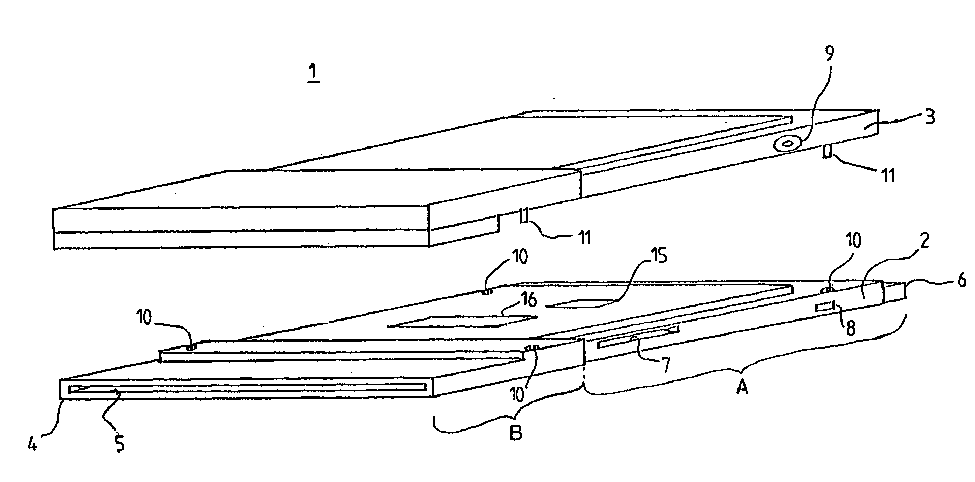

Im folgenden wird eine Ausführungsform des erfindungsgemäßen Chipkartenlesers anhand der Zeichnung beschrieben. Dabei zeigt die Figur 1 einen erfindungsgemäßen Chipkartenleser mit einem Oberteil und einem Unterteil in einer schematischen Darstellung.

In der Figur 1 ist ein Chipkartenleser insgesamt mit 1 bezeichnet. Der Chipkartenleser umfaßt ein Unterteil 2 und ein Oberteil 3, die jeweils einen Querschnitt aufweisen, die zu der lichten Weite eines Steckplatzes in einem elektronischen Gerät kompatibel ist. Dieser Abschnitt ist in der Figur 1 mit A bezeichnet. B bezeichnet einen zweiten Abschnitt des Chipkartenlesers, der in der Betriebsposition des Chipkartenlesers aus dem Einschubkanal des elektronischen Geräts heraussteht und der an einer dem Gerät abgewandten Stirnseite 4 einen Schlitz 5 zum Einführen einer ersten Chipkarte aufweist.

Der Chipkartenleser weist an seiner der Stirnseite 4 gegenüberliegenden Seite eine Kontaktleiste 6 zur Verbindung mit einer entsprechenden Kontaktleiste des elektronischen Geräts auf. In der Betriebsposition des Chipkartenlesers 1 ist die Kontaktleiste 6 mit dem Anschluß des elektronischen Geräts in Kontakt gebracht, so daß der Chipkartenleser mit dem Gerät Daten austauschen kann und aus diesem mit elektrischer Energie versorgt wird.

Außerdem weist der Chipkartenleser 1 an seiner Schmalseite im Abschnitt A einen Schlitz 7 als Öffnung einer Aufnahmevorrichtung für eine zweite Chipkarte auf. Bei der Ausführungsform gemäß Fig. 1 ist der Schlitz 7 deutlich schmaler als der Schlitz 5 zum Einführen der ersten Chipkarte, so daß zwei gängige Formate zur Anwendung kommen können. Es handelt sich dabei bei der derzeit bevorzugten Ausführungsform um das Format der Standardchipkarte von etwa 86 x 54 mm. Die zweite Chipkarte ist bei dieser Ausführungsform ein sogenannter Plug-In-Chip, wie er für kleine Mobiltelefone Verwendung findet.

Ebenfalls an der in Einschubrichtung seitlich liegenden Schmalseite des ersten Abschnitts A sind ein Infrarotsende- und Empfangsmodul 8 sowie ein Hochfrequenzkontakt 9 vorgesehen. Auf seiner dem Oberteil 3 zugewandten Flachseite weist das Unterteil 2 des Chipkartenlesers 1 vier Positionierbohrungen 10 auf, die mit Positionierstiften 11 an dem Oberteil 3 so zusammenwirken, daß im zusammengesteckten Zustand des Chipkartenlesers 1 das Oberteil 3 und das Unterteil 2 in der Ebene der Flachseiten gegeneinander formschlüssig fixiert sind. Sie sind dann nur in der in Figur 1 dargestellten Weise voneinander zu trennen. Im Abschnitt A der oberen Flachseite weist das Unterteil 2 noch Kontakteinheiten 15 und 16 für die erste bzw. die zweite Chipkarte auf. Diese Kontakteinheiten werden bei eingeschobener Chipkarte mit der jeweiligen Chipkarte in elektrisch leitende Verbindung gebracht, so daß der auf der Karte befindliche Chip adressiert werden kann.

Das Oberteil 3 kann mit dem Unterteil 2 des Chipkartenlesers 1 über eine drahtlose Infrarotverbindung kommunizieren, die nicht in der Figur 1 dargestellt ist, über eine ebenfalls kontaktlose Hochfrequenzverbindung oder über eine flexible elektrische Leiterbahn in Verbindung stehen. Diese Verbindungen sind in der Figur 1 nicht dargestellt.

Das Oberteil 3 enthält bei dem erfindungsgemäßen Chipkartenleser 1 ein Kommunikationsmodul, d.h. eine Sende- und Empfangseinrichtung für den Zugang zu einem Datenfunknetz, das für die Übertragung von digitalen Informationen geeignet ist. Hier kommen derzeit insbesondere die digitalen Mobilfunknetze in Frage. Die Sende- und Empfangsantenne des Oberteils 3 ist in dem aus dem elektronischen Gerät herausstehenden Abschnitt B angeordnet, so daß die Sendeleistung störungsfrei abgestrahlt werden kann. Die Leistungselektronik, die immerhin Sendeleistungen von bis zu 2 Watt zur Verfügung stellen muß, ist im Abschnitt A des Oberteils 3 vorgesehen. Es kann außerdem vorgesehen sein, daß nicht ein Hochfrequenzsende- und Empfangsmodul eingesetzt werden soll, sondern eine Infrarotsende- und Empfangseinheit. Deshalb ist vorgesehen, daß der Chipkartenleser bei dieser dargestellten Ausführungsform in zwei Teile auftrennbar ist, wobei das Unterteil 2 die eigentliche Kartenleseeinrichtung enthält, während das Oberteil 3 Peripherieeinrichtungen trägt, die je nach Einsatzzweck auswechselbar sind.

Das Unterteil 2 des Chipkartenlesers 1 ist an seiner in Figur 1 nicht sichtbaren Unterseite mit einer Ausnehmung versehen, die zwei Funktionen übernehmen kann. Zum einen kann die Ausnehmung für den Eingriff eines motorischen Einzugs dienen, der den Chipkartenleser bis in seine endgültige Betriebsposition in das elektronische Gerät einzieht. Außerdem kann eine Verriegelungsvorrichtung in diese Ausnehmung eingreifen, so daß der Chipkartenleser aus dem Gerät nur dann wieder herausgenommen werden kann, wenn die Verriegelungsvorrichtung den Chipkartenleser 1 freigibt. Die Verriegelung kann dabei mit dem motorischen Einzug gekoppelt sein, wobei eine besonders einfache Lösung vorliegt, wenn der motorische Einzug über ein Schneckengetriebe angetrieben ist.

Ein motorischer Einzug für den Chipkartenleser kann auch vorgesehen werden, wenn der Chipkartenleser mit seiner vollen Tiefe beispielsweise in einem Armaturenbrett eines Kraftfahrzeug versenkt werden soll. Dann ist der eigentliche Einschubschlitz des elektronischen Geräts gegenüber dem Armaturenbrett zurückgesetzt und auch der Abschnitt B des Chipkartenlesers steht aus dem Armaturenbrett nicht heraus. Ein Entnehmen des Chipkartenlesers ist dann nur durch den motorischen Antrieb möglich, der beispielsweise durch ein Kennwort aktiviert werden kann.

Der insoweit beschriebene Chipkartenleser ist durch seine modulare Bauweise vielseitig einsetzbar. Es kann aber auch, wenn die flexible Konfigurationsmöglichkeit nicht benötigt wird, die einteilige Ausführungsform gewählt werden.

Im folgenden wird die Verwendung des Chipkartenlesers 1 anhand von Beispielen beschrieben.

So kann der Chipkartenleser beispielsweise in einen entsprechend angepaßten Steckplatz an Bord eines Kraftfahrzeugs eingeschoben werden. Zuvor ist die zweite Chipkarte in den Schlitz 7 eingeführt und mit der Kontakteinrichtung 16 in Kontakt gebracht worden. Das Hochfrequenz-Sendemodul wird durch die Zugangsberechtigung und die Identifikationen, die auf der zweiten Chipkarte gespeichert sind, aktiviert und kann sich bei einem digitalen Datenfunknetz anmelden. Dabei wird nicht die Hochfrequenzantenne in dem Oberteil 3 verwendet, sondern die Sendeleistung über den HF-Kontakt 9 an der Seite des Oberteils 3 abgegeben, weil das Kraftfahrzeug als Faradayscher Käfig die Abstrahlung der Sendeleistung von der dem Chipkartenleser zugeordneten Antenne behindern würde. Der HF-Kontakt 9 kann dann das Signal an einen entsprechenden Kontakt in dem Einschub des Kraftfahrzeugs übergeben, von wo aus das Signal entsprechend verstärkt über eine Sendeantenne an der Außenseite des Kraftfahrzeugs abgestrahlt werden kann. Damit ist der Chipkartenleser 1 bei dem Datenfunknetz angemeldet und der Benutzer des Kraftfahrzeugs über die zweite Chipkarte identifiziert. In den Schlitz 5 an der Stirnseite des Chipkartenlesers 1 ist nun eine unpersönliche erste Chipkarte einzuführen, auf der ein Guthabenkonto geführt wird. Wenn mit dem Kraftfahrzeug eine gebührenpflichtige Straße befahren wird, beispielsweise Brücken, Tunnel oder Autobahnen, so kann der Chipkartenleser gegenüber an der Straße angeordneten Sende- und Empfangsstationen das Fahrzeug identifizieren, so daß beim Passieren dieser Stationen von der ersten Chipkarte Gebühren abgebucht werden können. Falls das Gebührenkonto auf der ersten Chipkarte zur Bezahlung der Straßenbenutzungsgebühren nicht ausreicht, kann die Identifikation des Benutzers abgegeben werden oder, falls der Kartenleser überhaupt nicht aktiviert ist, das Fahrzeug von der stationären Sende- und Empfangseinrichtung als unberechtigt identifiziert und fotografiert werden.

Eine weitere Anwendung des erfindungsgemäßen Kartenlesers ist das Aufladen der ersten, unpersönlichen Chipkarte, also das Füllen des auf der ersten Chipkarte geführten Gebührenkontos.

Die erste Chipkarte kann wie gesagt zum Bezahlen von Sraßenbenutzungsgebühren verwendet werden, aber auch zum Begleichen von Parkhausrechnungen, für die Benutzung öffentlicher Verkehrsmittel oder als herkömmliche Telefonkarte. In all diesen Fällen ist es vernünftig, die nicht personalisierte Chipkarte nur mit einem geringen Geldbetrag zu füllen, so daß der Verlust zu einem begrenzten Schaden führt. Dementsprechend häufig muß das Gebührenkonto auf der ersten Chipkarte wieder gefüllt werden, so daß eine einfache Möglichkeit hierfür erwünscht ist.

Dazu kann der Chipkartenleser 1 in einen stationären oder tragbaren Computer eingeschoben werden, der mit einem Steckplatz des entsprechenden Standards versehen ist. Die persönliche zweite Chipkarte ist dabei wiederum in den Kartenleser eingegeben, so daß der individuelle Zugang zu dem digitalen Funknetz möglich ist. Der über die zweite Chipkarte zur Nutzung des Zugangs berechtigte Benutzer kann dann beispielsweise auf sein Bankkonto zugreifen und von dem Bankkonto einen gewissen Betrag auf die erste Chipkarte umbuchen. Dieser Geldbetrag ist dann auf der ersten Chipkarte für die oben skizzierten Verwendungszwecke verfügbar, während das Konto des Karteninhabers der zweiten Chipkarte entsprechend belastet wird. Die Möglichkeit, den Kartenleser in dem Einschubkanal zu verriegeln, gewährleistet bei dieser Anwendungsart, daß der Chipkartenleser und damit die zweite Chipkarte nicht vor dem ordnungsgemäßen Abschluß des Buchungsvorgangs wieder aus dem Computer entnommen werden können.

Eine weitere mögliche Anwendung des erfindungsgemäßen Chipkartenlesers ist der Pay-TV-Bereich, wobei das für Pay-TV vorgesehen Fernsehgerät einen entsprechenden Steckplatz für einen Kartenleser aufweisen muß. Dann kann der Kartenleser mit eingeführter zweiter Chipkarte in das Fernsehgerät eingeschoben werden und autorisiert zum Zugang zu einem Pay-TV-Sender. Die zweite Chipkarte kann dabei beispielsweise den Zugang zum Abrechnungssystem einer Hotelkette oder sonstiger Autorisierungsfunktionen übernehmen. Wenn an den Einsatz im Fernseher eines Hotelzimmers gedacht ist, wäre der Chipkartenleser 1 als Zubehör zu dem Fernseher zu erwerben, so daß er im Besitz des Hotels ist und der Gast in seinem Zimmer letztlich einen Fernseher mit einem Einschubschlitz vorfindet, in den er seine erste Chipkarte einführen kann, um Pay-TV-Sendungen direkt von seiner Chipkarte zu bezahlen. Der Chipkartenleser 1 hat bei dieser Konstellation gegenüber einem fest eingebauten Kartenleser den Vorteil, daß er als Zubehör zu erwerben ist und der Fernseher nicht von vornherein mit einem Chipkartenleser gekauft werden muß. Diese Konfiguration hält den Grundpreis für den Fernseher auf dem Niveau eines normalen Fernsehers, wobei der Besitzer hinterher die freie Wahl hat, ob er den Fernseher mit einer Chipkartenlesevorrichtung ausstatten möchte oder nicht. Es sind derzeit auch andere Anwendungen denkbar, die aber nicht weiter beschrieben werden sollen.

## Patentansprüche

1. Chipkartenleser zum Einschub in ein elektronisches Gerät bis zu einer Betriebsposition, mit einen ersten Abschnitt (A), dessen Querschnitt der lichten Weite eines Einschubkanals angepaßt und in diesen einschiebbar ist, und mit einem zweiten Abschnitt (B), der einen Schlitz zum Einführen einer ersten Chipkarte aufweist und der in der Betriebsposition des Chipkartenlesers aus dem Einschubkanal hervorsteht,
**dadurch gekennzeichnet,**
**daß** im Bereich des ersten Abschnitts (A) eine Aufnahmevorrichtung (7) für wenigstens eine zweite Chipkarte vorgesehen ist, die so angeordnet ist, daß in der Betriebsposition des Chipkartenlesers die wenigstens eine zweite Chipkarte nicht entnehmbar ist.

2. Chipkartenleser nach Anspruch 1, **dadurch gekennzeichnet, daß** die Aufnahmevorrichtung (7) für wenigstens eine zweite Chipkarte (Plug-In-Chip) eingerichtet ist, die kleiner ist als die erste Chipkarte.

3. Chipkartenleser nach einem der vorhergehenden Ansprüche, **dadurch gekennzeichnet, daß** an einer in Einschubrichtung seitlich liegenden Schmalseite des ersten Abschnitts (A) ein Schlitz (7) zum Einführen der wenigstens einen zweiten Chipkarte (Plug-In-Chip) angeordnet ist.

4. Chipkartenleser nach einem der vorhergehenden Ansprüche, **dadurch gekennzeichnet, daß** an der in Einschubrichtung vorne liegenden Stirnseite eine Anzahl elektrischer Kontakte (6) vorgesehen ist.

5. Chipkartenleser nach einem der vorhergehenden Ansprüche, **dadurch gekennzeichnet, daß** an einer in Einschubrichtung seitlich liegenden Außenfläche des ersten Abschnitts (A) wenigstens ein optisches Senderund/oder Empfängermodul (8) vorgesehen ist.

6. Chipkartenleser nach einem der vorhergehenden Ansprüche, **dadurch gekennzeichnet, daß** an einer in Einschubrichtung seitlich liegenden Außenfläche des ersten Abschnitts (A) wenigstens ein für Hochfrequenz geeigneter Anschluß (9) vorgesehen ist.

7. Chipkartenleser nach einem der vorhergehenden Ansprüche, **dadurch gekennzeichnet, daß** an dem ersten Abschnitt (A) eine Eingriffsmöglichkeit für eine dem elektronischen Gerät zugeordnete Rastvorrichtung vorgesehen ist.

8. Chipkartenleser nach einem der vorhergehenden Ansprüche, **dadurch gekennzeichnet, daß** an dem ersten Abschnitt (A) eine Eingriffsmöglichkeit für einen dem elektronischen Gerät zugeordneten motorisch angetriebenen Einzug vorgesehen ist.

9. Chipkartenleser nach einem der vorhergehenden Ansprüche, **dadurch gekennzeichnet, daß** in dem zweiten Abschnitt (B) eine Sende- und Empfangseinrichtung angeordnet ist.

10. Chipkartenleser nach einem der vorhergehenden Ansprüche, **dadurch gekennzeichnet, daß** in dem zweiten Abschnitt (B) eine Antenne angeordnet ist.

11. Chipkartenleser nach einem der vorhergehenden Ansprüche, **dadurch gekennzeichnet, daß** in dem zweiten Abschnitt (B) eine Funkantenne für wenigstens eine Frequenz aus dem Frequenzbereich von 500 MHz bis 3 GHz vorgesehen ist.

12. Chipkartenleser nach einem der vorhergehenden Ansprüche, **dadurch gekennzeichnet, daß** in dem zweiten Abschnitt (B) eine optische Sendeund Empfangseinrichtung vorgesehen ist.

13. Chipkartenleser nach einem der vorhergehenden Ansprüche, **dadurch gekennzeichnet, daß** in dem zweiten Abschnitt (B) eine Infrarotsende- und Empfangseinrichtung vorgesehen ist.

14. Chipkartenleser nach einem der vorhergehenden Ansprüche, **dadurch gekennzeichnet, daß** ein Oberteil (3) und ein Unterteil (2) vorgesehen sind, die miteinander lösbar zu verbinden sind.

15. Chipkartenleser nach einem der vorhergehenden Ansprüche, **dadurch gekennzeichnet, daß** Positioniermittel (10, 11) vorgesehen sind, die das Oberteil (3) und das Unterteil (2) in Einschubrichtung relativ zueinander formschlüssig festlegen.

16. Chipkartenleser nach einem der vorhergehenden Ansprüche, **dadurch gekennzeichnet, daß** die Positioniermittel (10, 11) das Oberteil (3) und das Unterteil (2) in der Ebene einer Flachseite des ersten Abschnitts (A) relativ zueinander formschlüssig festlegen.

17. Chipkartenleser nach einem der vorhergehenden Ansprüche, **dadurch gekennzeichnet, daß** zwischen dem Oberteil (3) und dem Unterteil (2) eine elektrische Verbindung herstellbar ist.

18. Chipkartenleser nach einem der vorhergehenden Ansprüche, **dadurch gekennzeichnet, daß** zwischen dem Oberteil (3) und dem Unterteil (2) eine kontaktlose Verbindung herstellbar ist.

19. Chipkartenleser nach einem der vorhergehenden Ansprüche, **dadurch gekennzeichnet, daß** das Oberteil (3) und das Unterteil (2) über ein Folienscharnier miteinander verbunden sind.

## Claims

1. Chip card reader for insertion into an electronic device as far as an operating position which has a first section (A) with a cross section which matches the inside width of the insertion channel and can be inserted into the latter and a second section (B) with a slot for the insertion of a first chip card and which, in the operating position of the chip card reader, projects from the insertion channel,
**characterised in that** a holder (7) for at least one second chip card is provided in the area of the first section (A) which is disposed in such a manner that the at least one second chip card cannot be removed in the operating position of the chip card reader .

2. Chip card reader in accordance with claim 1, **characterised in that** the holder (7) is designed for at least one second chip card (plug-in-chip) which is smaller than the first chip card.

3. Chip card reader in accordance with one of the preceding claims, **characterised in that** a slot (7) for the introduction of the at least one second chip card (plug-in-chip) is provided on a narrow lateral of the first section (A) in the direction of insertion.

4. Chip card reader in accordance with one of the preceding claims, **characterised in that** at the front end in the direction of insertion, a number of electrical contacts (6) are provided.

5. Chip card reader in accordance with one of the preceding claims, **characterised in that** at least one optical transmitting and/or receiving module (8) is provided on the lateral outer face of the first section (A) in the direction of insertion.

6. Chip card reader in accordance with one of the preceding claims, **characterised in that** at least one connection (9) suitable for high frequencies is provided on the lateral outer face of the first section (A) in the direction of insertion.

7. Chip card reader in accordance with one of the preceding claims, **characterised in that** the first section (A) is provided with means for the engagement of a latching device belonging to the electronic device.

8. Chip card reader in accordance with one of the preceding claims, **characterised in that** the first section (A) is provided with means for the engagement of a motor-driven inserter associated with the electronic device.

9. Chip card reader in accordance with one of the preceding claims, **characterised in that** a transmitting and receiving device is disposed in the second section (B).

10. Chip card reader in accordance with one of the preceding claims, **characterised in that** an aerial is disposed in the second section (B).

11. Chip card reader in accordance with one of the preceding claims, **characterised in that** the second section (B) is provided with a radio transmission aerial for at least one frequency in the frequency range from 500 MHz to 3 GHz.

12. Chip card reader in accordance with one of the preceding claims, **characterised in that** an optical transmitting and receiving device is provided in the second section (B).

13. Chip card reader in accordance with one of the preceding claims, **characterised in that** an infrared transmitting and receiving device is provided in the second section (B).

14. Chip card reader in accordance with one of the preceding claims, **characterised in that** an upper section (3) and a lower section (2) are provided which are detachably connected with each other.

15. Chip card reader in accordance with one of the preceding claims, **characterised in that** positioning means (10, 11) are provided which positively locate the upper section (3) and the lower section (2) relative to one another in the direction of insertion.

16. Chip card reader in accordance with one of the preceding claims, **characterised in that** the positioning means (10, 11) locate the upper section (3) and the lower section (2) relative to one another in the plane of one flat side of the first section (A).

17. Chip card reader in accordance with one of the preceding claims, **characterised in that** an electrical connection can be established between the upper section (3) and the lower section (2).

18. Chip card reader in accordance with one of the preceding claims, **characterised in that** a contactless connection can be established between the upper section (3) and the lower section (2).

19. Chip card reader in accordance with one of the preceding claims, **characterised in that** the upper section (3) and the lower section (2) are connected with one another by means of a metal film hinge.

## Revendications

1. Lecteur de carte à puce destiné à être inséré dans un appareil électronique jusque dans une position de fonctionnement, comportant un premier tronçon (A) dont la section transversale est adaptée à la largeur utile d'un canal d'insertion, et qui peut être inséré dans ce dernier, un deuxième tronçon (B) muni d'une fente destinée à l'insertion d'une première carte à puce, et qui dépasse du canal d'insertion dans la position de fonctionnement du lecteur de carte à puce,
**caractérisé en ce que**,
dans la zone du premier tronçon (A), il est prévu un dispositif de réception (7) destiné à au moins une deuxième carte à puce qui est disposée de telle sorte que, dans la position de fonctionnement du lecteur de carte à puce, la seule deuxième carte à puce au moins ne puisse pas être retirée du lecteur de carte à puce.

2. Lecteur de carte à puce selon la revendication 1, **caractérisé en ce que** le dispositif de réception (7) est agencé pour au moins une deuxième carte à puce (Plug-in-Chip), qui est plus petite que la première carte à puce.

3. Lecteur de carte à puce selon l'une quelconque des revendications précédentes, **caractérisé en ce qu'**une fente (7) destinée à l'insertion de la seule deuxième carte à puce au moins (Plug-in-Chip) est pratiquée sur un côté étroit du premier tronçon (A) situé latéralement dans le sens d'insertion.

4. Lecteur de carte à puce selon l'une quelconque des revendications précédentes, **caractérisé en ce qu'**un nombre de contacts électriques (6) est prévu sur la face frontale située à l'avant dans le sens d'insertion.

5. Lecteur de carte à puce selon l'une quelconque des revendications précédentes, **caractérisé en ce qu'**au moins un module d'émission et de réception optique (8) est prévu sur une surface extérieure du premier tronçon (A) située latéralement dans le sens d'insertion.

6. Lecteur de carte à puce selon l'une quelconque des revendications précédentes, **caractérisé en ce qu'**un raccordement (9) approprié pour de la haute fréquence est prévu sur une surface extérieure du premier tronçon (A) située latéralement dans le sens d'insertion.

7. Lecteur de carte à puce selon l'une quelconque des revendications précédentes, **caractérisé en ce qu'**une possibilité d'engagement pour un dispositif d'encliquetage associé à l'appareil électronique est prévue sur le premier tronçon (A).

8. Lecteur de carte à puce selon l'une quelconque des revendications précédentes, **caractérisé en ce qu'**une possibilité d'engagement pour un dispositif d'introduction entraîné par voie motorisée associé à l'appareil électronique est prévue sur le premier tronçon (A).

9. Lecteur de carte à puce selon l'une quelconque des revendications précédentes, **caractérisé en ce qu'**un dispositif d'émission et de réception est disposé dans le deuxième tronçon (B).

10. Lecteur de carte à puce selon l'une quelconque des revendications précédentes, **caractérisé en ce qu'**une antenne est disposée dans le deuxième tronçon (B).

11. Lecteur de carte à puce selon l'une quelconque des revendications précédentes, **caractérisé en ce qu'**une antenne radio pour une fréquence se situant au moins dans la plage de fréquence de 500 MHz à 3 GHz est prévue dans le deuxième tronçon (B).

12. Lecteur de carte à puce selon l'une quelconque des revendications précédentes, **caractérisé en ce qu'**un dispositif d'émission et de réception optique est prévu dans le deuxième tronçon (B).

13. Lecteur de carte à puce selon l'une quelconque des revendications précédentes, **caractérisé en ce qu'**un dispositif d'émission et de réception à infrarouge est prévu dans le deuxième tronçon (B).

14. Lecteur de carte à puce selon l'une quelconque des revendications précédentes, **caractérisé en ce qu'**il est prévu une partie supérieure (3) et une partie inférieure (2), qui sont à relier entre elles de façon amovible.

15. Lecteur de carte à puce selon l'une quelconque des revendications précédentes, **caractérisé en ce qu'**il est prévu des moyens de positionnement (10, 11) qui, dans le sens de l'insertion, fixent l'une par rapport à l'autre la partie supérieure (3) et la partie inférieure (2) par complémentarité de formes.

16. Lecteur de carte à puce selon l'une quelconque des revendications précédentes, **caractérisé en ce que**, dans le plan de la face plate du premier tronçon (A), les moyens de positionnement (10, 11) fixent l'une par rapport à l'autre la partie supérieure (3) et la partie inférieure (2) par complémentarité de formes.

17. Lecteur de carte à puce selon l'une quelconque des revendications précédentes, **caractérisé en ce qu'**une liaison électrique peut être établie entre la partie supérieure (3) et la partie inférieure (2).

18. Lecteur de carte à puce selon l'une quelconque des revendications précédentes, **caractérisé en ce qu'**une liaison sans contact peut être établie entre la partie supérieure (3) et la partie inférieure (2).

19. Lecteur de carte à puce selon l'une quelconque des revendications précédentes, **caractérisé en ce que** la partie supérieure (3) et la partie inférieure (2) sont reliées entre elles par l'intermédiaire d'une charnière de type film.
